# EUROPÄISCHE PATENTSCHRIFT

(11) **EP 1 005 519 B1**
(45) Veröffentlichungstag und Bekanntmachung des Hinweises auf die Patenterteilung: **16.10.2002**
(21) Anmeldenummer: 98936424.5
(22) Anmeldetag: 15.07.1998
(51) Int. Cl.: C11D 3/37, C11D 3/00, C08G 63/668

(54) **AMPHIPHILE POLYMERE AUF BASIS VON POLYESTERN MIT EINKONDENSIERTEN, ACETALISCHEN GRUPPEN, DIE BEI RAUMTEMPERATUR FLÜSSIG SIND, SOWIE IHR EINSATZ IN WASCHMITTELN**
AMPHIPHILE POLYMERS BASED ON POLYESTER WITH CONDENSED ACETAL GROUPS WHICH ARE LIQUID AT ROOM TEMPERATURE AND ARE USED IN DETERGENTS AND CLEANING AGENTS
POLYMERES AMPHIPHILES LIQUIDES A LA TEMPERATURE AMBIANTE A BASE DE POLYESTERS AVEC DES GROUPES ACETALS INTEGRES PAR CONDENSATION, ET LEUR UTILISATION DANS DES PRODUITS DE LAVAGE ET DE NETTOYAGE

(30) Priorität: 18.08.1997 DE 19735715
(43) Veröffentlichungstag der Anmeldung: 07.06.2000
(73) Patentinhaber: SASOL Germany GmbH, 22297 Hamburg (DE)
(72) Erfinder: KOCH, Herbert, 46348 Raesfeld (DE)
(74) Vertreter: Schupfner, Georg U.
(86) Internationale Anmeldenummer: EP9804392
(87) Internationale Veröffentlichungsnummer: WO99009125

(56) Entgegenhaltungen:
- WO-A-97/09369
- GB-A- 1 516 850
- US-A- 3 424 726
- US-A- 4 159 978

## Beschreibung

Gegenstand der Erfindung sind bei Raumtemperatur flüssige, amphiphile Polymere auf Basis von Polyestern mit einkondensierten acetalischen Gruppen gemäß Formel I (Schmutzlösepolymere), deren Einsatz in pulverförmigen oder flüssigen Wasch- und Reinigungsmitteln und die Verwendung dieser Mittel bei der Textilverarbeitung und zum Waschen und Reinigen verschmutzter Oberflächen, insbesondere von harten Oberflächen und von Gewebeoberflächen.

Die Zusammenstellung von Formulierungen für Wasch- und Reinigungsmittel ist eine komplexe Aufgabe, da die Formulierungen in der Lage sein müssen, Verschmutzungen der verschiedensten Art von verschmutzten Oberflächen wie z.B. Gewebeoberflächen zu entfernen. Besonders die schnelle und effiziente Entfernung von fettigen oder öligen Anschmutzungen ist im allgemeinen problematisch.

Zur Schonung der natürlichen Ressourcen gehört nicht allein die Verwendung von Tensiden auf Basis nachwachsender Rohstoffe, sondern ganz besonders auch die Herstellung von bei gleichbleibendem Rohstoffeinsatz immer wirksameren Formulierungen, die trotzdem den Anforderungen an ihre biologische Abbaubarkeit genügen. Darüber hinaus müssen die immer kompakter werdenden tensidhaltigen Formulierungen für Wasch- und Reinigungsmittel auch bei ebenfalls aus ökologischen Gründen sinkender Wassermenge in der Waschflotte schnell in Wasser löslich sein.

All diese Anforderungen lassen sich nicht mehr allein auf physikalischem Wege erfüllen, sondern erfordern den Einsatz leistungsfähigerer Formulierungen mit neuen, nach Möglichkeit multifunktionellen Inhaltsstoffen.

Aus dem Stand der Technik sind Wasch- und Reinigungsmittel bekannt, die sog. "Soil-repellant"- bzw. "Soil-release"-Polymere enthalten. Diese Verbindungen bewirken unter anderem, daß sich abgelöste Schmutzstoffe nicht wieder auf dem Gewebe absetzen und somit zu einer Vergrauung führen.

DE-A-14 69 403 beschreibt ein Verfahren zur oberflächenverändernden Behandlung von aus Polyestern abgeleiteten Artikeln. Dabei sind die hergestellten Polyester aus Ethylenterephthalat-Einheiten (ET) aufgebaut mit ET : POET = 2 - 6 : 1, wobei Polyethylenglykole mit Molgewichten von 1000 - 4000 eingesetzt werden (POET = Polyoxyethylenterephthalat). Die Beschichtung der Faser erfolgt durch Wärmebehandlung mit dem Polyester bei Temperaturen von ca. 90 °C, wodurch das Gewebe eine dauerhafte Oberflächenbehandlung erfährt, die neben einer Wirkung als Schutzschicht auch eine statische Aufladung des Gewebes verhindert.

In US-A-4 427 557 und EP-A-0 066 944 werden anionisch modifizierte Polyester beschrieben, die neben Ethylenterephthalat- und Polyoxyethylenterephthalat-Einheiten als weitere Polymerisationskomponente das Natriumsalz der Sulfoisophthalsäure beinhalten. Die polymerisierten Polyethylenglykole (PEG) besitzen Molmassen von 200 - 1000 und ergeben nach ihrer Polymerisation mit Ethylenglykol (EG) und Terephthalsäure Polyester mit Molgewichten von 2000 - 10 000.

US-A-3 959 230 beansprucht ET/POET-Polyester mit ET : POET = 25 : 75 - 35 : 65, wobei niedermolekulare Polyethylenglykole mit Molgewichten von 300 - 700 eingesetzt werden und die gewonnenen Polyester Molgewichte von 25 000 - 55 000 aufweisen.

Neben der Wirkung als Schmutzlösepolymer beansprucht EP-A-0 319 094 auch den Einsatz von ET/POET-Copolymeren als Textilhilfsmittel zur Behandlung von Wäsche im automatischen Wäschetrockner. Hierbei werden besonders die Vorteile der antistatischen Eigenschaften der mit Schmutzlösepolymer behandelten Wäsche herausgestellt.

Als kostengünstige Konfektionierung der Schmutzlösepolymeren d.h. als ein Verfahren zum Einbringen von Schmutzlösepolymeren in eine wäßrige Formulierung bzw. in die Waschflotte wird in US-A-4 740 326 ein "Coating" auf einen wasserunlöslichen Träger beschrieben. Als Pfropfungsgrundlage dienen verschiedene Fasersysteme wie z.B. Nylon bzw. eine sog. Reemay-Faser.

Als eine weitere Variation der o.g. Polyester wird das Einbringen von verzweigten monomeren Glykolbausteinen beansprucht, wie z.B. 1,2-Propylen-, 1,2-Butylen- und 3-Methoxy-1,2-propylenglykolen (EP-A-0 241 985).

Die Performance der eingesetzten Schmutzlösepolymere (WO 92 06 152) kann in anionischen oder nichtionischen Tensidformulierungen besonders durch Zusatz von Tensiden auf Basis von Polyhydroxyfettsäureamiden (Glucamide) gesteigert werden.

Eine weitere Modifizierung der Polyester beinhaltet den Einbau von kationischen Komponenten auf Basis quaternärer Stickstoffverbindungen, die im Vergleich zu nichtionischen Polyestern noch wirkungsvoller sein sollen (US-A-4 956 447).

In EP-A-0 253 567 und EP-A-0 357 280 werden im besonderen auch endgruppenverschlossene Polyester (capped polyesters) beschrieben, die zum einen durch nichtionische Gruppen wie z.B. C₁- bis C₄-Alkyl, C₁- bis C₄-Hydroxylalkyl, C₁- bis C₄-Acyl als auch durch ionische Succinatgruppen verschlossen werden.

Die Aktivität eines Schmutzlösepolymers in einer Flüssigwaschmittelformulierung sowie die Lagerstabilität der Formulierung läßt sich nach Aussagen von DE-A-34 11 941 durch Zusatz geringer Salzmengen verbessern.

Als eine weitere Form der Konfektionierung von Schmutzlösepolymeren beschreibt DE-A-33 24 258 das Lösen bzw. Dispergieren eines PET/POET-Polyesters mit PET : POET = 2 - 6 : 1 in einem flüssigen, nichtionischen Tensid und Versprühen dieser Mischung auf einen Builder (PET-Polyethylenterephthalat).

Durch die Lagerung der Schmutzlösepolymere zusammen mit alkalischen Waschmittelkomponenten erfahren diese Aktivitätsverluste, die auf eine Hydrolyse der Esterbindungen zurückzuführen sind. Dem kann entgegengewirkt werden durch Zusammenschmelzen von PET/POET-Copolymeren mit Alkalimetallpolyacrylaten bei 70 bis 150 °C und anschließende Pulverisierung (US-A-4 571 303, US-A-4 569 772).

Als besonderer Vorteil wird in DE-A-37 27 727 bei der Herstellung von PET/POET-Copolymeren der Einsatz von PET herausgestellt, das aus Abfallflaschen gewonnen wurde.

DE-A-40 01 415 beansprucht die Darstellung und Verwendung eines Polyesters als vergrauungsinhibierender und schmutzablösender Zusatz zu pulverförmigen und flüssigen Waschmitteln. Die Polyester werden durch Kondensation von mindestens 2 Carboxylgruppen enthaltenden Carbonsäuren mit mehrwertigen Alkoholen erhalten. Zusätzlich werden noch alkoxylierte mehrwertige Alkohole eingesetzt, die durch Anlagerung von 5 - 80 mol Ethylenoxid (EO) und/oder Propylenoxid (PO) gewonnen werden. Die Produkte zeichnen sich durch eine verbesserte Wirksamkeit und eine bessere Verträglichkeit mit flüssigen und pulverförmigen Waschmittelformulierungen aus.

In der EP-A-0 523 956 wird eine Waschmittelformulierung beschrieben, die ein wasserlösliches bzw. wasserdispergierbares Copolymer beinhaltet, das ein UV-absorbierendes Monomer enthält. Die Herstellung dieses Schmutzlösepolymers erfolgt durch Polykondensation von DMT mit EG, PEG (Molgewicht 200 - 3 000) und Methyl-4-aminobenzoat (DMT = Dimethylterephthalat).

Polyester-Verbindungen hergestellt aus Diolen enthaltend Acetalgruppen sind bekannt.

Die US-A-415 99 78 beschreibt z.B. Polyacetal-Verbindungen enthaltend ethoxylierte Polyester als Schmutz-Löse-Polymere . Der Polyester wird z.B. hergestellt aus Dimethyltherephtalat und Ethylenglycol in Gegenwart von Tetraisopropylorthotitanat, gefolgt von einer Umsetzung mit Polyoxyethylenglycol, wobei die resultierende Polyacetal-Verbindung aus dem ethoxylierten Polyester durch Umsetzung mit Paraformaldehyd und p-Toluolsulfonsäure gewonnen wird.

Die US-A-342 47 26 und die GB A 151 68 50 beschreiben thermoplastische Kunststoffe zur Verwendung als Polyester-Fasern hergestellt durch Umsetzung von Dicarbonsäuren, wie Terephtalsäure - Derivaten, mit Diolen, welche Acetalgruppen enthalten.

Die in diesen Schriften beschriebenen Verbindungen unterscheiden sich jedoch von den erfindungsgemäßen Polyestern u.a. hinsichtlich der in diesen enthaltenen Acetalgruppen.
Merkmal der zur Zeit beanspruchten Schmutzlösepolymere ist ihre zu geringe Wasserlöslichkeit bzw. schlechte Dispergierbarkeit in Wasser. Dies bedingt, daß solche Substanzen nur zum Teil in die Waschflotte übergehen und somit schlechte Schmutzlöseeigenschaftgen aufweisen. Weiterhin zeichnen sich die bislang beanspruchten Schmutzlösepolymere durch ihre feste Konsistenz aus. Dies erfordert bei ihrem späteren Einsatz in einer Formulierung eine Konfeklionierung, d.h. das im Reaktionsprozeß anfallende Schmutzlösepolymer muß gemahlen, granuliert oder auf einen Trager (z.B. Natriumsulfat) aufgesprüht werden. Zum Teil werden die Schmutzlösepolymere auch als wäßrige Dispersionen angeboten mit den Nachteilen eines geringen Aktivgehaltes, der Separation von Feststoffpartikeln während der Lagerung und dem Einbringen von Wasser beim Einsatz in einer Waschmittelformulierung.

Der vorliegenden Erfindung liegt die Aufgabe zugrunde, neue Stoffe und Waschmitteladditive ohne die geschilderten nachteiligen Merkmale zur Verfügung zu stellen.

Die Aufgabe wird erfindungsgemäß gelöst mit amphiphilen Polyestern gemäß der Summenformel I. Gegenstand der Erfindung sind daher amphiphile Polyester gemäß der empirischen Summenformel I

**(CAP)**_{**x**}**(T)**_{**z**}**(I)**_{**q**}**(D)**_{**r**}**(P)**_{**s**}**(En)**_{**t**}**(A)**_{**y**}**(PG)**_{**v**} (I)

in der
- (CAP): Endgruppen repräsentiert, die das Polymer am Ende verschließen und
a.) Sulfoaroylgruppen,
b.) Gruppen mit der Formel MO₃-S-(O)ᵤ-(CH₂)ₚ-(RO)_{w}-, in der M für ein Metallion, insbesondere Alkali- (besonders bevorzugt wird das Natrium- oder Kaliumsalz) oder Erdalkaliion, Ammonium- oder substituierte Ammoniumionen, z.B. mit einer oder mehreren Hydroxylalkylresten mit jeweils zwei bis vier C-Atomen im Hydroxylalkylrest, und R für Ethylen oder Mischungen von Ethylen und Propylen, u für 0 oder 1, p für 0 oder 1 und w für eine Zahl von 1 bis 100 stehen,
c.) Poly(oxyethylen)monoalkylether-Gruppen, in denen die Alkylgruppe 1 bis 24 C-Atome enthält und die Polyoxyethylengruppe aus 2 bis 200 Oxyethyleneinheiten besteht,
d.) Acyl- und Aroylgruppen mit 4 bis 40 Kohlenstoffatomen,
e.) Hydroxyacyl- und Hydroxyaroylgruppen mit 2 bis 25 Kohlenstoffatomen,
f.) Poly(oxyalkylen)monoalkylphenolether, in denen die Alkylgruppe 6 bis 18 Kohlenstoffatome enthält und die Polyoxyalkylengruppe aus 0 bis 80 Oxyalkyleneinheiten besteht
g.) Mischungen davon,
sind
und x für Werte von 0 bis 2,
- (T): für eine Arylendicarbonylgruppe und z für eine Zahl von größer 0 bis 50,
- (I): für eine interne anionische Gruppe und q für eine Zahl von 0 bis 30,
- (D): für eine acetalische Gruppe und r für eine Zahl von größer 0 bis 80, wobei die acetalische Gruppe herstellbar ist durch Umsetzung von Formylestern oder Dialdhyden bzw deren Acetalen mit Glycerin.
- (P): für eine Polyolgruppe mit mindestens 3 Hydroxylgruppen und s für eine Zahl von 0 bis 80, wobei der Anteil des Polyols kleiner 30 mol% bezogen auf die Summe der Monomereinheiten ist,
- (En): für eine Poly(oxyalkylen)oxy-Gruppe, die aus 2 bis 100 Oxyalkylengruppen, vorzugsweise Oxyethylengruppen, aufgebaut ist, wobei t eine Zahl von 0-25 bedeutet und die Alkylgruppen 2 bis 6 C-Atome enthalten,
- (A): für eine l,n-Alkylendicarbonyl-Gruppe, die aus 2 bis 24 C-Atomen aufgebaut ist, und y für eine Zahl von 0 bis 15,
- (PG): für eine Oxypropylenoxy-Gruppe und v für eine Zahl von 0 bis 80
steht,
und wobei die Oligo-/Polyester Molekulargewichte von 500 bis 100 000 besitzen.

Die Werte für x, z, q, r, s, t, y und v in der Summenformel I können auch beliebige gebrochene Zahlen innerhalb der angegebenen Grenzen annehmen.

Ein weiterer Gegenstand der Erfindung ist der Einsatz der Schmutzlösepolymeren in pulverförmigen oder flüssigen Wasch- und Reinigungsmitteln und die Verwendung dieser Mittel zum Waschen und Reinigen verschmutzter Oberflächen und bei der Textilverarbeitung.

In der empirischen Summenformel wird die dem Rest (T) = Arylendicarbonyl-Gruppe zugrundeliegende Estereinheit vorzugsweise aus Terephthalsäure-, Isophthalsäure- und Phthalsäuredialkylester ausgewählt, wobei natürlich auch Gemische dieser Komponenten möglich sind.

Grundsätzlich können auch aliphatische Diester als Monomerbausteine eingesetzt werden. Die unter der Gruppe (A)_{y} = 1,n-Alkylendicarbonyl-Gruppe zugrundeliegenden aliphatischen Diester sind vorzugsweise ausgewählt aus Malonsäure-, Bernsteinsäure-, Fumarsäure-, Maleinsäure-, Glutarsäure-, Adipinsäure-, Pimelinsäure-, Korksäure-, Azelainsäure- und Sebacinsäuredialkylestern.

Die unter der Bezeichnung (I) in der Summenformel aufgeführten internen anionischen Gruppen sind vorzugsweise ausgewählt aus Sulfophthaloyl-, Sulfoisophthaloyl- (5-Sulfoisophthaloyl) und Sulfoterephthaloyl-Gruppen, die in Form ihrer Salze, insbesondere der Alkali- (bevorzugt Natrium-) oder Ammoniumsalze, eingesetzt werden. Im allgemeinen können hier auch aliphatische, anionische Monomere eingesetzt werden, die sich von sulfonierten aliphatischen Diestern wie z.B. Maleinsäure-, Adipinsäure-, Sebacinsäure etc. -diestern ableiten.

Den über Estergruppen gebundenen Endgruppen (CAP) können neben Sulfoaroyl- und Gruppen mit der Formel MO₃-S-(O)ᵤ-(CH₂)ₚ-(RO)_{w}- auch Acyl- und Aroylgruppen mit 4 bis 40 Kohlenstoffatomen zugrunde liegen, sowie Hydroxyacyl- und Hydroxyaroylgruppen. Endgruppen dieser Art sind z.B. in DE 44 17 686 beansprucht. Als typische Vertreter seien an dieser Stelle aufgezählt: Valeriansäure, Capronsäure, Önanthsäure, Caprylsäure, Pelargonsäure, Caprinsäure, Undecansäure, Undecensäure, Laurinsäure, Benzoesäure, die 1 bis 5 Substituenten mit insgesamt bis zu 30 C-Atomen, insbesondere 1 bis 12 C-Atome tragen, wobei sämtliche Endgruppen in Form ihrer Alkylester in das Polymer eingeführt werden.

Als typische Vertreter von Hydroxyacyl- und Hydroxyaroyl-Endgruppen seien an dieser Stelle aufgezählt: Milchsäure, Hydroxyvaleriansäure, Hydroxycapronsäure, Ricinolsäure, o-, m- und p-Hydroxybenzoesäure. Die Hydroxymonocarbonsäuren können über ihre freie Hydroxylgruppe und/oder ihre Carboxylgruppe miteinander verbunden sein.

Als weitere Endgruppen sind Poly(oxyalkylen)monoalkylether aufgeführt. Vorzugsweise werden hier ethoxylierte Alkohole mit 1 bis 24 Kohlenstoffatomen im Alkylrest und 2 bis 200 Oxyethyleneinheiten eingesetzt.

Weitere Endgruppen der erfindungsgemäßen Schmutzlösepolymere stellen Poly(oxyalkylen)monoalkylphenolether dar, die beispielsweise in DE 40 01 415 beansprucht werden.

Die unter der Bezeichnung (D) in der Summenformel aufgerührten acetalischen Gruppen sind ausgewählt aus Umsetzungsprodukten von Formylestern oder Dialdehyden bzw. deren Acetalen mit (vorzugsweise 2 mol) Glycerin. Besonders bevorzugt ist hierbei der Einsatz des Umsetzungsproduktes von Tetraalkoxypropan mit 2 mol Glycerin. Es handelt sich hierbei um ein Mischprodukt verschiedener isomerer Dioxolane/Dioxane.
(siehe Strukturformeln I)

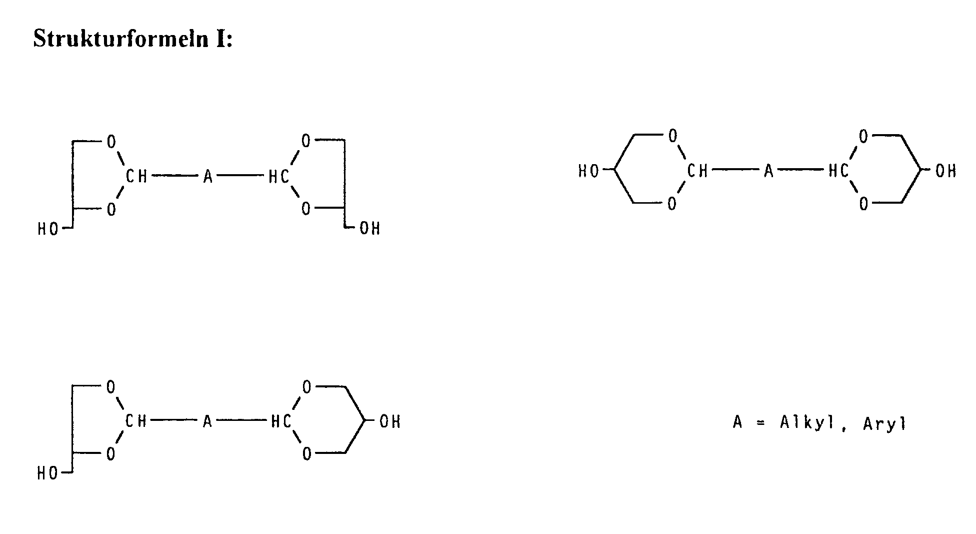

Die Herstellung der bei der Synthese der erfindungsgemäßen Polymeren eingesetzten Acetalmonomeren erfolgt entsprechend dem Stand der Technik durch sauer katalysierte Acetalisierung und/oder Umacetalisierung der Aldehydkomponenten mit Glycerin.

Als Katalysatoren für die Acetalisierungs-/Umacetalisierungsreaktionen eignen sich Mineralsäuren wie z.B. HCI, H₂SO₄, H₃PO₄ oder HClO₄ organische Carbon- und Sulfonsäuren wie z.B. Methansulfonsäure, p-Toluolsulfonsäure, Oxalsäure, Ameisensäure, Essigsäure, Propionsäure, oder Lewissäuren wie z.B. BF_{3,} AlCl₃, ZnCl₂ oder TiCl₄. Bei der schonenderen Umacetalisierung können auch saure Tonminerale wie z.B. Montmorillonit K 10 eingesetzt werden.

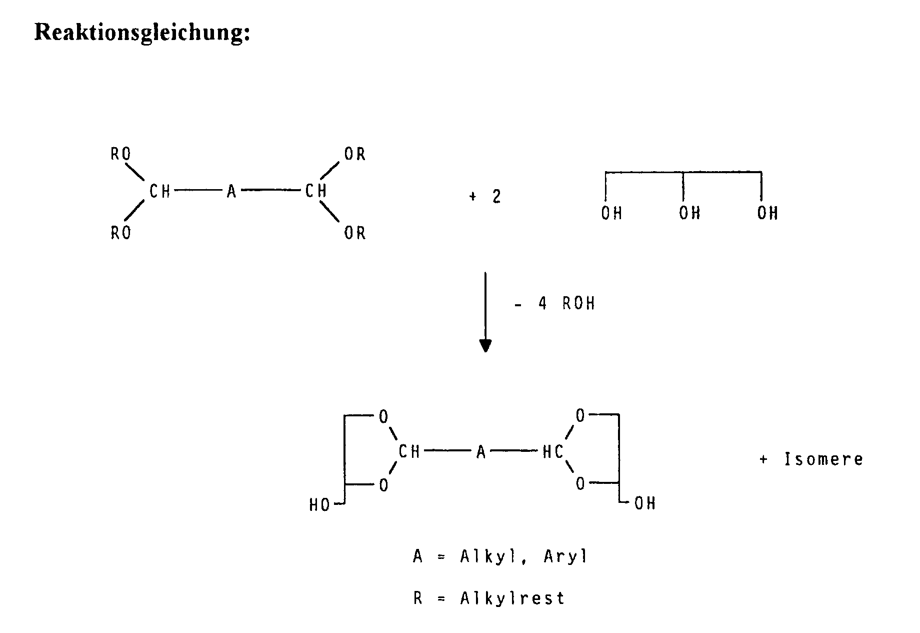

Die unter der Bezeichnung (P) in der empirischen Summenformel aufgeführten Polyolgruppen mit mindestens 3 Hydroxylgruppen sind vorzugsweise ausgewählt aus Mono-, Di- und Triglycerin, Trimethylolpropan, Sorbitol, Pentaerythrit und Erythrit. Besonders bevorzugt ist hierbei der Einsatz von Glycerin.

Die beanspruchten Schmutzlösepolymere können durch konventionelle, bekannte Polymerisationsverfahren hergestellt werden.

Die Synthese dieser Polymere kann in Form einer direkten Umsetzung aller Monomerbausteine in einem Schritt erfolgen, so daß statistisch verteilte Polymere (sog. Randomstrukturen) erhalten werden. Eine andere Herstellweise ist eine Mehrschrittsynthese z.B. derart, daß eine Vorkondensation verschiedener Bausteine erfolgt.

Der bei der Umesterung gebildete Alkohol wird über eine Fraktionierkolonne und/oder einen Dephlegmator abgezogen. Grundsätzlich werden Temperaturen von ca. 80 bis 250 °C und Drücke von Normaldruck bis < 1 mbar eingestellt. Dabei können die gewonnenen Polymere auf unterschiedliche Molekulargewichte eingestellt werden. Diese liegen vorzugsweise zwischen 500 und 20 000.

Als Katalysatoren können sämtliche für Umesterungsreaktionen bekannten Katalysatoren eingesetzt werden wie z.B. Titanate, Gemische von Antimontrioxid und Calciumacetat, Stannane, Zinkacetat etc.. Titanate sind jedoch grundsätzlich zu bevorzugen, da die Umsetzungen mit diesen Katalysatoren schneller ablaufen und die gewonnenen Produkte eine bessere Farbqualität aufweisen.

Die gebildeten Poly-/Oligoester können partiell mit verschiedenen Endgruppen versehen sein. Partiell bedeutet in diesem Zusammenhang, daß der Einsatz dieser Endgruppen nicht stöchiometrisch erfolgen muß, so daß in dem gewonnenen Polymergemisch (Verteilung) nur ein Teil der Polymermoleküle mit Endgruppen versehen ist. Der partielle Einbau von Endgruppen wirkt sich dabei zum einen regulierend auf das Molekulargewicht aus, andererseits führt er zur Stabilisierung der gewonnenen Polymere.

Als vorteilhaft hinsichtlich der Performance der erhaltenen Polymere zeigt sich auch der Einsatz von Sulfoisophthalsäuredimethylester im Gemisch mit Dimethylterephthalat bei diesem Reaktionsschritt.

Je nach Wahl der Monomere [(interne anionische Gruppen (1) bzw. anionische Endgruppen (CAP)] erhält man sowohl anionische als auch nichtionische Schmutzlösepolymere.

Die zu verwendenden Schmutzlösepolymere sind dann besonders wirksam, wenn das Gewebe bereits vor einer Anschmutzung damit gewaschen oder imprägniert worden ist.

Allgemein zeigen die eingesetzten Schmutzlösepolymere, die Gegenstand der erfindungsgemäßen Formulierungen sind, aufgrund ihres ober- bzw. grenzflächenaktiven Charakters eine Primärwaschwirkung, die im Zusammenhang mit unterschiedlichen Formulierungen zu einer erheblichen Steigerung der Waschleistung führen kann.

Die Einsatzmengen an Schmutzlösepolymer betragen 0,05 bis 25 Gew.-%, bezogen auf die jeweilige Formulierung. Die amphiphilen Poly- bzw. Oligoester werden vorzugsweise in phosphatfreien und in phosphatreduzierten Waschmitteln verwendet.

Die erfindungsgemäßen Schmutzlösepolymere sind in Wasser löslich oder können darin dispergiert werden. Sie können in verschiedenen Formen bei der Herstellung von Waschmitteln eingesetzt werden. Aufgrund ihrer flüssigen Konsistenz können sie generell durch sämtliche Methoden in Waschmittelformulierungen eingearbeitet werden, die auch bei der Konfektionierung von flüssigen, nichtionischen Tensiden angewendet werden.

### Beispiele

### Beispiel 1 (Umsetzungsprodukt von Tetramethoxypropan mit Glycerin)

In einem 500 ml Mehrhalskolben mit Glasrührer, Heizbad (Öl), Destillationsaufsatz, Füllkörperkolonne, Destillationsbrücke, Vakuumverteiler, Destillationskolben, Kühlfalle und Innenthermometer wurden insgesamt 164,2 g (1,0 mol) 1,1,3,3-Tetramethoxypropan der Hüls AG und 193,4 g (2,1 mol) wasserfreies Glycerin vorgelegt. Nach Zugabe von 0,2 Gew.-% Toluolsulfonsäure wurde unter starkem Rühren die zweiphasige Reaktionsmischung bis auf Temperaturen von 90 bis 110 °C aufgeheizt und das gebildete Methanol aufgefangen.

Nachdem der größte Teil der theoretisch zu erwartenden Methanolmenge aufgefangen war, wurde für 30 min Vakuum (20 mbar) angelegt, um die restliche Methanolmenge destillativ zu entfernen. Das Produkt wurde mit einer Ausbeute von 91,0 % erhalten.

### Beispiel 2

In einem 4l Mehrhalskolben mit Glasrührer, Heizbad (Öl), Schutzgaseinleitung, Destillationsaufsatz, Füllkörperkolonne, Destillationsbrücke, Vakuumverteiler, Destillationskolben, Kühlfalle und Innenthermometer wurden insgesamt 960 g (2,2 mol) Polyethylenglykolmonomethylether mit einem gewichtsmittleren Molekulargewicht von ca. 440 g/mol (Marlipal® 1/12 der Hüls AG), 13,2 g des Dioxan-/Dioxolanmonomers aus Beispiel 1, 583 g (3,0 mol) Dimethylterephthalat, 114 g (1,5 mol) 1,2-Propylenglykol, 221g (2,4 mol) Glycerin, 1,6 g 2,6-Di-tert.-butyl-p-kresol (Ionol® von Shell) sowie 1 ml Tetraisopropylorthotitanat unter Schutzgas vorgelegt.

Die Reaktionsmischung wurde langsam bis auf Temperaturen von 150 bis 220 °C aufgeheizt und das gebildete Methanol aufgefangen.

Nachdem der größte Teil der theoretisch zu erwartenden Methanolmenge aufgefangen war, wurde die Reaktionsmischung abgekühlt, die Kolonne ausgebaut, Vakuum (<1 mbar) angelegt und die Mischung wieder bis auf maximal 230 °C aufgeheizt.
Das bei der Reaktion nicht umgesetzte Propylenglykol bzw. Glycerin wurde dabei als Destillat aufgefangen.

Nachdem das Produkt eine Hydroxylzahl von ca. 100 mg KOH/ g Substanz erreicht hatte, wurde die Reaktion abgebrochen.

### Beispiel 3

In Analogie zu Beispiel 2 wurden insgesamt 205 g (2.7 mol) Polyethylenglycolmonomethylether mit einem gewichtsmittleren Molekulargewicht von ca. 440 g/mol (Marlipal® 1/12 der Hüls AG), 583 g (3,0 mol) Dimethylterephthalat, 251g (3,3 mol) 1,2-Propylenglykol, 10 g des Dioxan-/Dioxolanmonomers aus Beispiel 1, 1,6 g 2,6-Di-tert.-butyl-p-kresol (Ionol® von Shell) sowie 1 ml Tetraisopropylorthotitanat unter Schutzgas vorgelegt.

Die Reaktionsmischung wurde wiederum langsam bis auf Temperaturen von 150 bis 220 °C aufgeheizt und das gebildete Methanol aufgefangen.

Nachdem der größte Teil der theoretisch zu erwartenden Methanolmenge aufgefangen war, wurde die Reaktionsmischung abgekühlt, die Kolonne ausgebaut, Vakuum (<1 mbar) angelegt und die Mischung wieder bis auf maximal 230 °C aufgeheizt.

Das bei der Reaktion nicht umgesetzte 1,2-Propylenglykol wurde dabei als Destillat aufgefangen.

Nachdem das Produkt eine Hydroxylzahl von ca. 50 mg KOH/ g Substanz erreicht hatte, wurde die Reaktion abgebrochen.

### Beispiel 4

In Analogie zu Beispiel 2 wurden insgesamt 680 g (1,7 mol) Polyethylenglykol mit einem gewichtsmittleren Molekulargewicht von 400 g/mol (Lipoxol® 400 der Hüls AG), 168 g (0,5 mol) Polyethylenglykolmonomethylether mit einem gewichtsmittleren Molekulargewicht von ca. 335 g/mol (Marlipal® 1/7 der Hüls AG), 583 g (3 mol) Dimethylterephthalat, 152 g (2 mol) 1,2-Propylenglykol, 175 g (1,9 mol) Glycerin, 15 g des Dioxan-/Dioxolanmonomers aus Beispiel 1, 1,6 g 2,6-Di-tert.-butyl-p-kresol (Ionol® von Shell) sowie 1 ml Tetraisopropylorthotitanat unter Schutzgas vorgelegt.

Die Reaktionsmischung wurde wiederum langsam bis auf Temperaturen von 150 bis 220 °C aufgeheizt und das gebildete Methanol aufgefangen.
Nachdem der größte Teil der theoretisch zu erwartenden Methanolmenge aufgefangen war, wurde die Reaktionsmischung abgekühlt, die Kolonne ausgebaut, Vakuum (<1 mbar) angelegt und die Mischung wieder bis auf maximal 230 °C aufgeheizt.
Das bei der Reaktion nicht umgesetzte 1,2-Propylenglykol und Glycerin wurde dabei als Destillat aufgefangen.

Nachdem das Produkt eine Hydroxylzahl von ca. 80 mg KOH/ g Substanz erreicht hatte, wurde die Reaktion abgebrochen.

## Patentansprüche

1. Amphiphile bei Raumtemperatur flüssige Polyester, **dadurch gekennzeichnet, daß** die amphiphilen Polyester durch die empirische Summenformel (I) gekennzeichnet sind;
(CAP)ₓ(T)_{z}(I)_{q}(D)ᵣ(P)ₛ(En)ₜ(A)_{y}(PG)ᵥ (I)
in der
(CAP) Endgruppen repräsentiert, die das Polymer am Ende verschließen und
a.) Sulfoaroylgruppen,
b.) Gruppen mit der Formel MO₃-S-(O)ᵤ-(CH₂)ₚ-(RO)_{w}-, in der
M für ein Metallion, Ammoniumion oder substituiertes Ammoniumion und
R für Ethylen oder Mischungen von Ethylen und Propylen,
u für 0 oder 1,
p für 0 oder 1 und
w für eine Zahl von 1 bis 100 stehen,
c.) Poly(oxyethylen)monoalkylether-Gruppen, in denen die Alkylgruppe 1 bis 24 C-Atome enthält und die Polyoxyethylengruppe aus 2 bis 200 Oxyethyleneinheiten besteht,
d.) Acyl-und Aroylgruppen mit 4 bis 40 Kohlenstoffatomen,
e.) Hydroxyacyl- und Hydroxyaroylgruppen mit 2 bis 25 Kohlenstoffatomen,
f.) Poly(oxyalkylen)monoalkylphenolether, in denen die Alkylgruppe 6 bis 18 Kohlenstoffatome enthält und die Polyoxyalkylengruppe aus 0 bis 80 Oxyalkyleneinheiten besteht
g.) Mischungen davon sind
und x für Werte von 0 bis 2,
(T) für eine Arylendicarbonylgruppe und z für eine Zahl von größer 0 bis 50,
(I) für eine interne anionische Gruppe und q für eine Zahl von 0 bis 30,
(D) für eine acetalische Gruppe und r für eine Zahl von größer 0 bis 80, wobei die acetalische Gruppe herstellbar ist durch Umsetzung von Formylestern oder Dialdehyden bzw. deren Acetalen mit Glycerin,
(P) für eine Polyolgruppe mit mindestens 3 Hydroxylgruppen und s für eine Zahl von 0 bis 80, wobei der Anteil des Polyols kleiner 30 mol% bezogen auf die Summe der Monomereinheiten ist,
(En) für eine Poly(oxyalkylen)oxy-Gruppe, die aus 2 bis 100 Oxyalkylengruppen aufgebaut ist, wobei t eine Zahl von 0-25 bedeutet und die Alkylgruppen 2 bis 6 C-Atome enthalten,
(A) für eine l,n-Alkylendicarbonyl-Gruppe, die aus 2 bis 24 C-Atomen aufgebaut ist, und y für eine Zahl von 0 bis 15,
(PG) für eine Oxypropylenoxy-Gruppe und v für eine Zahl von 0 bis 80 steht
und wobei die Oligo-/Polyester Molekulargewichte von 500 bis 100 000 besitzen.

2. Amphiphile Polymere nach Anspruch 1,
**dadurch gekennzeichnet,**
**daß** die Polymere Molekulargewichte von 500 bis 20 000 besitzen.

3. Amphiphile Polymere nach einem der Ansprüche 1 und 2,
**dadurch gekennzeichnet,**
**daß** (T) für eine Terephthalatgruppe steht.

4. Amphiphile Polymere nach mindestens einem der Ansprüche 1 bis 3,
**dadurch gekennzeichnet,**
**daß** (En) für eine Poly(oxyethylen)oxy-Gruppe steht.

5. Amphiphile Polymere nach mindestens einem der Ansprüche 1 bis 4,
**dadurch gekennzeichnet,**
**daß** (I) das Natriumsalz der 5-Sulfoisophthaloyl-Gruppe bedeutet.

6. Amphiphile Polymere nach mindestens einem der Ansprüche 1 bis 5,
**dadurch gekennzeichnet,**
**daß** (P) für eine Glyceringruppe steht.

7. Amphiphile Polymere nach mindestens einem der Ansprüche 1 bis 6,
**dadurch gekennzeichnet,**
**daß** die acetalische Gruppe (D) aus dem Umsetzungsprodukt eines Dialdehyds mit 2 mol Glycerin besteht.

8. Amphiphile Polymere nach mindestens einem der Ansprüche 1 bis 7,
**dadurch gekennzeichent,**
daß die acetalische Gruppe (D) das Umsetzungsprodukt aus einem Tetraalkoxypropan mit 2 mol Glycerin darstellt.

9. Amphiphile Polymere nach mindestens einem der Ansprüche 1 bis 6,
**dadurch gekennzeichnet,**
**daß** die acetalische Gruppe (D) aus dem Umsetzungsprodukt eines Formylesters mit Glycerin besteht.

10. Amphiphile Polymere nach mindestens einem der vorhergehenden Ansprüche,
**dadurch gekennzeichnet,**
**daß** y 0 ist.

11. Amphiphile Polymere nach mindestens einem der vorhergehenden Ansprüche,
**dadurch gekennzeichnet,**
**daß** q, x, und y 0 sind.

12. Verwendung der amphiphilen Polymere nach mindestens einem der Ansprüche 1 bis 11 in Waschmittelformulierungen.

13. Verwendung der amphiphilen Polymere nach mindestens einem der Ansprüche 1 bis 11 in Formulierungen bei der Textilverarbeitung.

14. Verwendung der die amphiphilen Polymere enthaltenen Formulierungen nach einem der vorhergehenden Ansprüchen zum Waschen und Reinigen harter Oberflächen.

15. Verwendung der die amphiphilen Polymere enthaltenen Formulierungen nach einem der vorhergehenden Ansprüche zum Waschen und Reinigen von Gewebeoberflächen.

## Claims

1. Amphiphilic polyesters, liquid at room temperature, wherein the amphipilic polyesters are identified by the empirical sum formula (I)
(CAP)ₓ(T)_{z}(I)_{q}(D)ᵣ(P)ₛ(En)ₜ(A)_{y}(PG)ᵥ (I)
wherein
(CAP) represents end groups which cap the polymer at the end and are
a.) sulphoaroyl groups,
b.) groups with the formula MO₃-S-(O)ᵤ-(CH₂)ₚ-(RO)_{w}-, in which
M stands for a metal ion, ammonium ion or substituted ammonium ion and
R for ethylene or mixtures of ethylene and propylene,
u for 0 or 1,
p for 0 or 1 and
w for a number from 1 to 100,
c.) poly(oxyethylene)monoalkylether groups, wherein the alkyl group contains 1 to 24 C atoms and the poly-oxyethylene group comprises 2 to 200 oxyethylene units,
d.) acyl and aroyl groups with 4 to 40 carbon atoms,
e.) hydroxy-acyl and hydroxy-aroyl groups with 2 to 25 carbon atoms,
f.) poly(oxyalkylene)monoalkyl phenol ethers, in which the alkyl group contains 6 to 18 carbon atoms and the poly-oxyalkylene group comprises 0 to 80 oxyalkylene units,
g.) mixtures thereof
and x for numbers from 0 to 2,
(T) stands for an arylen dicarbonyl group and z for a number from larger 0 to 50
(I) for an internal anionic group and q for a number from 0 to 30,
(D) for an acetalic group and r for a number from larger 0 to 80, whereby the acetalic group is obtainable by conversion of formyl esters or dialdehydes or their acetales with glycerine,
(P) for a polyol group with at least 3 hydroxyl groups and s for a number from 0 to 80, with the share of the polyol being smaller 30 mol % relative to the total of the monomer units,
(En) for a poly(oxyalkylene)oxy-group composed of 2 to 100 oxy-alkylene groups, with t meaning a number from 0 - 25 and the alkyl groups containing 2 to 6 C atoms,
(A) for a l,n-alkylene dicarbonyl group composed of 2 to 24 C atoms and y for a number from 0 to 15,
(PG) for an oxypropylene oxy-group and v for a number from 0 to 80, whereby the oilgo/polyesters have molecular weights of 500 to 100,000

2. Amphiphilic polymers according to claim 1
wherein
the polymers have molecular weights from 500 to 20,000.

3. Amphiphilic polymers according to one of the claims 1 and 2
wherein
(T) stands for a terephthalate group

4. Amphipilic polymers according to at least one of the claims 1 to 3
wherein
(En) stands for a poly(oxyethylene)oxy-group.

5. Amphiphilic polymers according to at least one of the claims 1 to 4
wherein
(I) means the sodium salt of the 5-sulpho-isophthaloyl group.

6. Amphiphilic polymers according to at least one of the claims 1 to 5
wherein
(P) stands for a glycerine group,

7. Amphiphilic polymers according to at least one of the claims 1 to 6
wherein
the acetalic group (D) comprises the conversion product of a dialdehyde with 2 mol glycerine.

8. Amphipilic polymers according to at least one of the claims 1 to 7
wherein
the acetalic group (D) comprises the conversion product of a tetra-alkoxy propane with 2 mol glycerine.

9. Amphipilic polymers according to at least one of the claims 1 to 6
wherein
the acetalic group (D) comprises the conversion product of a formyl ester with 2 mol glycerine.

10. Amphipilic polymers according to at least one of the above claims
wherein
y is 0.

11. Amphiphilic polymers according to at least one of the above claims
wherein
q, x and y are 0.

12. Use of the subfactant polymers according to at least one of the claims 1 to 11 in washing agent formulations.

13. Use of the subfactant polymers according to at least one of the claims 1 to 11 in formulations used in the processing of textiles.

14. Use of the formulations containing the subfactant polymers according to one of the above mentioned claims for the washing and cleansing of hard surfaces.

15. Use of the formulations containing the subfactant polymers according to one of the above mentioned claims for the washing and cleansing of fabric surfaces.

## Revendications

1. Polyesters amphiphiles, liquides à température ambiante, **caractérisés en ce que** les polyesters amphiphiles sont **caractérisés par** la formule brute empirique (I) :
(CAP)ₓ(T)_{z}(I)_{q}(D)ᵣ(P)ₛ(En)ₜ(A)_{y}(PG)ᵥ (I)
dans laquelle
(CAP) représente des groupements terminaux qui ferment le polymère en l'extrémité et sont
a) des groupements sulfoaryle,
b) des groupements avec la formule MO₃-S-(O)ᵤ-(CH₂)ₚ-(RO)_{w}-, dans laquelle
M représente un ion métallique, un ion ammonium ou un ion ammonium substitué et
R représente un éthylène ou des mélanges d'éthylène et de propylène,
u représente 0 ou 1,
p représente 0 ou 1 et
w représente un nombre de 1 à 100,
c) des groupements poly(oxyéthylène)monoalkyléther, dans lesquels le groupement alkyle contient 1 à 24 atomes de carbone et le groupement polyoxyéthylène est constitué de 2 à 200 unités oxyéthylène,
d) des groupements acyle ou aroyle avec 4 à 40 atomes de carbone,
e) des groupements hydroxyacyle et hydroxyaroyle avec 2 à 25 atomes de carbone,
f) des poly(oxyalkylène)monoalkylphénoléthers, dans lesquels le groupement alkyle contient 6 à 18 atomes de carbone et le groupement polyoxyalkylène est constitué de 0 à 80 unités oxyalkyléthylène,
g) des mélanges de ceux-ci
et x représente les valeurs de 0 à 2,
(T) représente un groupement arylènedicarboxyle et z un nombre supérieur à 0 jusqu'à 50,
(I) représente un groupement anionique interne et q un nombre de 0 à 30,
(D) représente un groupement acétalique et r un nombre supérieur à 0 jusqu'à 80, le groupement acétaliqueique pouvant être préparé par transformation d'esters de formyle ou de dialdéhydes ou, selon le cas, de leurs acétals avec du glycérol,
(P) représente un groupement polyol avec au moins 3 groupements hydroxyle et s représente un nombre de 0 à 80, la proportion en polyol étant inférieure à 30% en mole par rapport à la somme des unités monomères,
(En) représente un groupement poly(oxyalkylène)oxy, qui est constitué de 2 à 100 groupements oxyalkylène, t signifiant un nombre de 0 à 25 et les groupements alkyle contenant 2 à 6 atomes de carbone,
(A) représente un groupement 1,n-alkylènedicarbonyle, qui est constitué de 2 à 24 atomes de carbone et y représente un nombre de 0 à 15,
(PG) représente un groupement oxypropylèneoxy et v un nombre de 0 à 80
et les oligoesters/polyesters présentant des poids moléculaires de 500 à 100000.

2. Polymères amphiphiles selon la revendication 1, **caractérisés en ce que** les polymères présentent des poids moléculaires de 500 à 20000.

3. Polymères amphiphiles selon l'une quelconque des revendications 1 et 2, **caractérisés en ce que** (T) représente un groupement téréphtalate.

4. Polymères amphiphiles selon au moins l'une quelconque des revendications 1 à 3, **caractérisés en ce que** (En) représente un groupement poly(oxyéthylène)oxy.

5. Polymères amphiphiles selon au moins l'une quelconque des revendications 1 à 4, **caractérisés en ce que** (I) signifie le sel sodique du groupement 5-sulfoisophtaloyle.

6. Polymères amphiphiles selon au moins l'une quelconque des revendications 1 à 5, **caractérisés en ce que** (P) représente un groupement glycérol.

7. Polymères amphiphiles selon au moins l'une quelconque des revendications 1 à 6, **caractérisés en ce que** le groupement acétaliqueique (D) est constitué du produit de transformation d'un dialdéhyde avec 2 moles de glycérol.

8. Polymères amphiphiles selon au moins l'une quelconque des revendications 1 à 7, **caractérisés en ce que** le groupement acétalique (D) représente le produit de transformation d'un tétraalcoxypropane avec 2 moles de glycérol.

9. Polymères amphiphiles selon au moins l'une quelconque des revendications 1 à 6, **caractérisés en ce que** le groupement acétalique (D) est constitué du produit de transformation d'un ester de formyle avec du glycérol.

10. Polymères amphiphiles selon au moins l'une quelconque des revendications précédentes, **caractérisés en ce que** y représente 0.

11. Polymères amphiphiles selon au moins l'une quelconque des revendications précédentes, **caractérisés en ce que** q, x et y représentent 0.

12. Utilisation des polymères amphiphiles selon au moins l'une quelconque des revendications 1 à 11 dans des formulations de détergents.

13. Utilisation des polymères amphiphiles selon au moins l'une quelconque des revendications 1 à 11 dans des formulations pour la transformation de textiles.

14. Utilisation des formulations contenant les polymères amphiphiles selon l'une quelconque des revendications précédentes pour le lavage et le nettoyage de surfaces dures.

15. Utilisation des formulations contenant les polymères amphiphiles selon l'une quelconque des revendications précédentes pour le lavage et le nettoyage de surfaces de tissus.
